# EUROPEAN PATENT APPLICATION

(11) **EP 1 752 431 A2**
(43) Date of publication of application: **14.02.2007**
(21) Application number: 06253816.0
(22) Date of filing: 20.07.2006
(51) Int. Cl.: C04B 35/5831, C22C 26/00

(54) **High content CBN materials, compacts incorporating the same and methods of making the same**

(30) Priority: 03.08.2005 US 197168
(71) Applicant: SMITH INTERNATIONAL, INC., Houston, Texas 77032 (US)
(72) Inventor: Franzen, Jan M., Sandy, Utah 84070 (US)
(74) Representative: Parry, Christopher Stephen

(57) **Abstract**

High content CBN materials, compacts incorporating the same and methods of making the same are provided. The CBN materials and CBN material compacts include a CBN material having a W₂Co₂₁B₆ phase. To form an exemplary material, TiCN is mixed with A1 to form a first mixture that is heated under vacuum to form a binder. The binder is crushed and mixed with, CBN to form a mixture which is sintered to form the CDN material.

## Description

### BACKGROUND OF THE INVENTION

This invention is directed to Cubic Boron Nitride (denoted as "CBN" or "c-BN") materials and compacts and more specifically to high content sintered CBN materials and compacts incorporating such materials and to methods of making the same. CBN materials and compacts are formed using known methods as for example described on U.S. Patent No. 4,403,075.

High content CBN materials are typically used in machining cast iron, powder metals and tool steels. As the lives of these CBN materials are limited, CBN materials with longer lives are desired.

### SUMMARY OF THE INVENTION

In one exemplary embodiment a solid material is provided including CBN grains and a W₂Co₂₁B₆ phase. The material may include one or more other phases from the group of phases such as CBN, TiCN, TiC, TiN, WC, CoWB and Co phases and Al containing phases. In another exemplary embodiment, the solid material is bonded to a substrate. A bonding layer of material may be used to bond the solid material to the substrate.

In yet a further exemplary embodiment a cutting tool is provided having a substrate and a working material over the substrate. The working material includes CBN grains, and a W₂Co₂₁B₆ phase. The working material may also include one or more other phases from the group of phases such as CBN, TiCₓN_{y} (where y = 1-x and 0≤x≤1), WC, CoWB, Co and Al. A bonding layer may be used to bond the working layer to the substrate.

In another exemplary embodiment, a method of making a CBN material is provided. The method includes mixing TiCN with Al to form a first mixture and then heating the first mixture at a sufficient vacuum for reacting only some of the Al in the mixture and forming a binder material. The method further includes crushing the binder material, mixing at least a portion of the crushed binder material with CBN grains forming second mixture, and sintering the second mixture forming the CBN material. In another exemplary embodiment, the binder material is crushed to a granular form having grains not greater that about 4 µm in size. In a further exemplary embodiment, the binder is crushed to have an average grain size not greater than twice the size of the average CBN grain size.

In one exemplary embodiment the heating is accomplished at a temperature in the range of about 1200° C to about 1300° C. In a further exemplary embodiment the heating is accomplished a temperature in the range of about 1200° C to about 1300° C for about 90 minutes. In another exemplary embodiment, the heating is accomplished in a vacuum in the range of about 10⁻⁴ torr to about 10⁻⁶ torr.

In yet a further exemplary embodiment, the second mixture is sintered with a substrate forming the material bonded to the substrate. In another exemplary embodiment, the material is bonded to a substrate after the material is formed.

In another exemplary embodiment a method is provided of making a CBN material. The method includes mixing TiCN with Al to form a first mixture, heating the first mixture at a temperature of at least about 900ºC and a vacuum below about 10⁻⁴ torr forming a binder material, crushing the binder material, mixing at least a portion of the crushed binder material with CBN grains forming second mixture, and sintering the second mixture forming said CBN material.

In yet a further exemplary embodiment, the method includes heating the first mixture to a temperature in the range of 900º C to 1200º C. In another exemplary embodiment the heating is accomplished for about 90 minutes. In a further exemplary embodiment, the heating is accomplished in a vacuum in the range of 10⁻⁴ to 10⁻⁶ torr. In yet a further exemplary embodiment, the second mixture is sintered with a substrate forming the material bonded to the substrate. In another exemplary embodiment, the material is bonded to a substrate. In yet another exemplary embodiment, after heating the binder material comprises free Al. In yet a further exemplary embodiment, the second mixture contains about 65-98 volume percent CBN. In another exemplary embodiment, the binder material is crushed to a granular form having grains not greater that about 4 µm in size. In a further exemplary embodiment, the binder is crushed to have an average grain size not greater than twice the size of the average CBN grain size.

### BRIEF DESCRIPTION OF THE DRAWINGS

FIG. 1 is a front view of an exemplary embodiment material of the present invention.
FIG. 2 is a front end view of an exemplary embodiment compact of the present invention incorporating an exemplary embodiment material of the present invention.
FIG. 3 is a front end view of an exemplary embodiment compact of the present invention formed by bonding an exemplary embodiment material of the present invention to a substrate.
FIG. 4 is a X-ray defraction spectrum of an exemplary CBN material of the present invention.
FIG. 5 is a magnified view of an exemplary CBN material of the present invention as viewed through a scanning electron microscope.

### DETAILED DESCRIPTION OF EXEMPLARY EMBODIMENTS OF THE INVENTION

A CBN material and compact are provided having enhanced operating lives. It should be noted that the term "CBN material" as used herein means a material comprising CBN, as for example, a polycrystalline CBN material. An exemplary embodiment CBN material is made by first forming binder by mixing TiCN with aluminum and processing the resulting mixture at temperature and vacuum. The resulting binder material is crushed and mixed with CBN material particles, e.g. a CBN powder. In an exemplary embodiment, the crushed binder is mixed with the CBN powder and sintered in a refractory metal can at high pressure and high temperature ("HP/HT sintering") using known methods. An exemplary refractory metal can may be made from Niobium or Molybdenum.

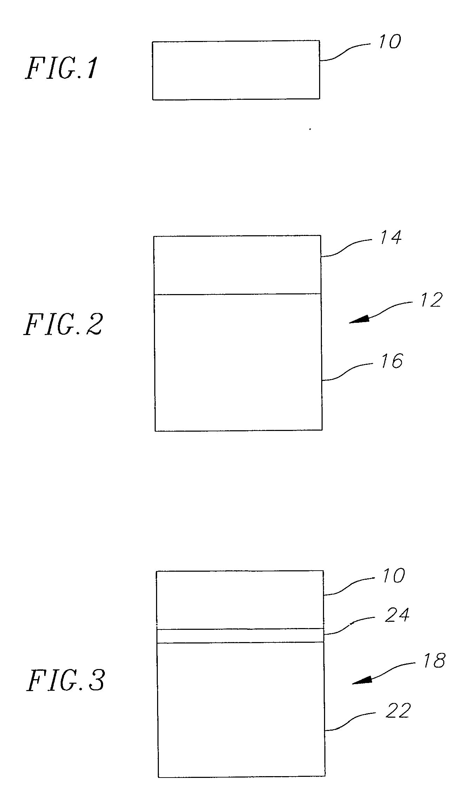

In an exemplary embodiment, TiCN is mixed with 16 weight-% A1 and processed in a vacuum in a range of 10⁻⁴ torr to 10⁻⁶ torr and at a temperature in the range of 900° C to 1200° C forming a binder material. In yet a further exemplary embodiment, the processing occurs at a vacuum in a range of 10⁻⁵ torr to 10⁻⁶ torr. In another exemplary embodiment, the processing takes place at a temperature in the range of 1000°C to 1200 °C. In another exemplary embodiment any stoichiometric combination of TiN and TiC (i.e., TiCₓN_{y}, where y=1-x and 0≤x≤1) may be mixed with the aluminum and processed in the aforementioned temperatures and vacuums for forming the binder material. The formed binder material is crushed and then mixed with 90 vol-% CBN and then HP/HT sintered in a refractory metal can forming a solid CBN material 10, as for example shown in FIG. 1. In another exemplary embodiment, the crushed binder is mixed with CBN in the range of 65-98 vol-%. In yet a further exemplary embodiment the crushed binder is mixed with CBN in the range of 80-95 vol-%.

The crushing of the formed binder may be accomplished by using known methods such as attritor milling or jet milling. In an exemplary embodiment, the binder is crushed to a granular material having a grain size smaller than about 5 µm. In another exemplary embodiment, the binder is crushed to a granular material having a grain size smaller than about 4 µm. In yet a further exemplary embodiment, the binder is crushed to granular material having an average grain size less than, or equal to, twice the average CBN grain size.

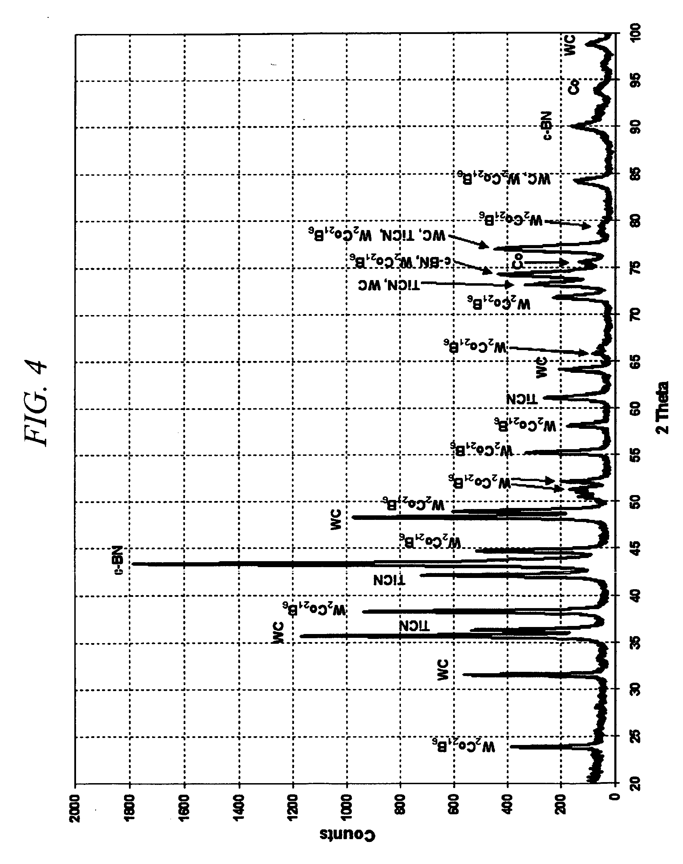

A compact 12 may also be formed by loading the mixture of CBN powder and crushed binder along with a substrate, such as a cemented tungsten carbide substrate in a refractory metal can and HP/HT sintering the can with its contents using known methods. The HP/HT sintering process causes the mixture to solidly forming a polycrystalline CBN layer 14 material and to bond to the substrate 16 forming the compact 12 as shown in FIG. 2. A compact 18 may also be formed by forming the inventive CBN material 10 and then bonding or brazing it on to a substrate 22 such as a tungsten carbide substrate using known methods, For example, a bonding layer 24, as for example shown in FIG. 3 may be used to bond the CBN material layer 10 to the substrate 22. The compact may then be bonded to a cutting tool, or machining tool (collectively or individually hereinafter "cutting tool"). In an alternate exemplary embodiment, the substrate itself may be the body, or part of the body, of a tool, as for example an end mill or other cutting tool or element. The resulting CBN material or compact has improved operational life compared with conventional CBN materials.

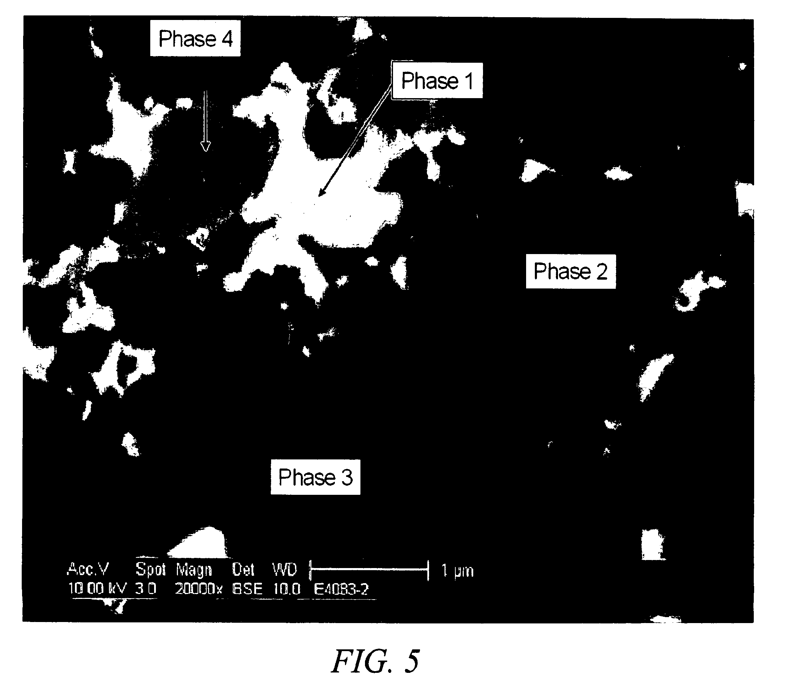

Applicant has discovered that the resulting CBN material has a microstructure which contains a phase of W₂Co₂₁B₆ as detected by X-ray defraction ("XRD"). An XRD spectrum for an exemplary material of the present invention is shown in FIG. 4. The spectrum depicts the intensity of the various phases as the material plane being examined by XRD is rotated at various angles of 2 theta about an axis perpendicular to the material plane. FIG. 5 depicts a phase distribution of an exemplary CBN material as seen through a scanning electron microscope. Based on energy dispersive X-ray analysis and the aforementioned XRD analysis, Phase 1 depicted in FIG. 5 is rich in W, Co and B and is believed to be W₂Co₂₁B₆. Phase 2 is CBN. Phase 3 as seen by energy dispersive X-ray analysis is rich in Al and N and is believed to be AlN. Phase 4 is TiCN.

W₂Co₂₁B₆ is believed to form when a Co-W eutectic melt reacts with liberated B atoms during HP/HT sintering. The Co-W eutectic melt is either infiltrated from a WC-Co substrate or created as Co and WC residue in the powder melts. The Co and WC residue is deposited by the WC-Co mixing medium which is used during mixing or milling of the CBN powder with a binder. It is believed that the free Al in the powder reacts with the CBN to form mainly AlN. When N in CBN is tied up as AlN the B atoms are free to react with the Co-W eutectic to form W₂Co₂₁B₆. The free Al in the powder is therefore believed to play an important role in the formation of the W₂Co₂₁B₆ phase. It is also believed that any stoichiometric combination of TiN and TiC, (i.e., TiCₓN_{y}, where y=1-x and 0≤x≤1) and not only TiCN, will result in a CBN material with improved operational life compared to conventional CBN materials.

The W₂Co₂₁B₆ phase is believed to bring at least two important benefits to the PCBN material. First, it strengthens and hardens the binder phase of the material by a precipitation-hardening effect. Second, it improves the high temperature hardness and strength Co, which would otherwise be present in the material as a metallic phase is reacted to form W₂Co₂₁B₆, which is believed to have a higher melting point than metallic Co.

In an exemplary material, applicant believes that the enhanced life may be due to the presence of the W₂Co₂₁B₆ phase and also due to the presence of Al in the crushed binder. Applicant believes that by processing the TiCN and the Al in a high vacuum in a range of about 10⁻⁴ torr to 10⁻⁶⁻torr, and/or by processing in a high temperature at a range of about 900°C to about 1200°C, not all of the Al reacts with the TiCN. Consequently, some residual Al remains which reacts with the CBN when forming the resulting polycrystalline CBN material.

In other exemplary embodiments, the resulting material microstructure besides CBN grains and a phase of W₂Co₂₁B₆, may also include CBN, TiCN, TiC, TiN, WC, CoWB, Co and/or a phase containing Al. An exemplary CBN material may include about 70-90 mass-% CBN, about 5-10 mass-% TiCN, or Tic and TiN, about 2-6 mass-% WC, about 1-15 mass-% W₂Co₂₁B₆ and/or about 1-4 mass-% Al containing phase. In many cases the Al containing phase is not detectible. Applicant believes that since aluminum is added as part of the binder when forming the material, an Al containing phase, and most likely an AlN containing phase, is likely to be present in small amounts which may be too small to be detected by XRD. A very small amount of Co may also be present.

Following are three examples of exemplary embodiment materials of the present invention and of methods of forming the same.

### Example 1

One hundred and sixty (160) grams Al (1 µm average grain size) was turbula mixed with 840g TiCN (1.5 µm) for 4 hours. The mixture was heated in a high vacuum furnace (10⁻⁵-10⁻⁶ torr) at 1200° C for 90 minutes forming a heated binder powder. The heated powder was investigated with XRD and was found to contain TiCN, Al₃Ti and residual Al that had not reacted.

The binder powder was crushed in a 4 inch Jet milling apparatus until the grain size was below 4 µm. Thereafter 12.42g of the binder was mixed with 87.58g (90 volume-%) of 2-4 µm CBN powder in a ballmill running at 100 RPM. Two thousand (2000) grams WC-Co balls were added as grinding media and the mixing was done with 150 ml isopropanol forming a CBN powder mixture. Milling time was 4 hours. Thereafter, the mixture was reduced in a vacuum at 1000°C for 90 minutes.

The CBN powder mixture was loaded with a cemented carbide substrate in a refractory metal can and HP/HT sintered forming a compact having a CBN material layer bonded to the substrate. The resulting CBN material had a hardness of HV3 3200kg/mm² and a bending strength of 950 MPa. XRD identified CBN, TiCN, Co, WC, and W₂Co₂₁B₆ phases in the resulting CBN material.

The compact was Electro-Discharge Machining ("EDM") cut into a triangular shape and brazed on to a cemented carbide carrier to make a cutting tool insert. The insert was ground to an ISO CNMA432T00525 style and tested on gray cast iron of 200HB hardness at 1070m/min cutting speed, 0.5mm/rev feed rate and 0.38mm depth of cut. Flank wear was measured after every pass. After 25 passes the material had 40% less flank wear compared to typical commercially available CBN materials for the same application.

### Example 2

Two hundred and sixty (260) grams Al (1 µm average grain size) was turbula mixed with 740g TiCN (1.5 µm) for 4 hours. The mixture was heated in a high vacuum furnace (10⁻⁵-10⁻⁶ torr) at 1200° C for 90 minutes. The heated powder was investigated with XRD and was found to contain TiCN, Al₃Ti and residual Al that had not reacted.

The binder powder was crushed in a 4 inch Jet milling apparatus until the grain size was below 4 µm. Thereafter 12.42g of the binder was mixed with 87.58g (90 vol-%) of 2-4 µm CBN powder in a ballmill running at 100 RPM. Two thousand (2000) grams WC-Co balls were added as grinding media and the mixing was done with 150 ml isopropanol forming a CBN powder mixture. Milling time was 4 hours. Thereafter the mixture was reduced in a vacuum for 90 minutes.

The CBN powder mixture was loaded with a cemented carbide substrate in a refractory metal can and HP/HT sintered forming a compact having a CBN material layer bonded to the substrate. The resulting CBN material had a hardness of HV3 3250 kg/mm² and a bending strength of 1150 MPa. XRD identified CBN, TiCN, Co, WC, and W₂Co₂₁B₆ phases in the resulting CBN material.

The compact was EDM cut into a triangular shape and brazed into a cemented carbide carrier to make a cutting tool insert. The insert was ground to an ISO CNMA432T00525 style and tested in gray cast iron of 200HB hardness at 1070m/min cutting speed, 0.5mm/rev feed rate and 0.38mm depth of cut. Flank wear was measured after every pass. After 12 passes the material had 20% less flank wear compared to typical commercially available CBN materials for the same application.

### Example 3

One hundred and sixty (160) grams Al (1 µm average grain size) was turbula mixed with 840g TiCN (1.5 µm) for 4 hours. The mixture was heated in a high vacuum furnace (10⁻⁵ - 10⁻⁶ torr) at 1000°C for 90 minutes. The heated powder was investigated with XRD and was found to contain TiCN, Al₃Ti and residual Al that had not reacted.

The binder powder was crushed in an attritor milling apparatus until the grain size was below 4 µm. Attritor milling was done in Heptane with 3500g WC-Co balls. Milling speed was 400 rpm. Milling time was 4 hours.

Thereafter, 12.42g of the binder was mixed with 87.58g of 2-4 µm CBN powder in a ballmill running at 100 RPM. Two thousand (2000) grams WC-Co balls were added as grinding media and the mixing was done with 150 ml isopropanol forming a CBN powder mixture. Milling time was 4 hours. Thereafter, the mixture was reduced in a vacuum at 1000°C for 90 minutes.

The CBN powder mixture was loaded with a cemented carbide substrate in a refractory metal can and HP/HT sintered forming a compact having a CBN material layer bonded to the substrate. The resulting CBN material had a hardness of HV3 3200kg/mm² and a bending strength of 1300 MPa. XRD CBN, TiCN, Co, WC, and W₂Co₂₁B₆ phases in the resulting CBN material.

The compact was EDM cut into a triangular shape and brazed into a cemented carbide carrier to make a cutting tool insert. The insert was ground to an ISO CNMA432T00525 style and tested in gray cast iron of 200HB hardness at 1070m/min cutting speed, 0.5mm/rev feed rate and 0.38mm depth of cut. Flank wear was measured after every pass. After 30 passes the material had 25% less flank wear compared to typical commercially available CBN materials for the same application.

Although the present invention has been described and illustrated to respect to exemplary embodiments, it is to be understood that it is not to be so limited, since changes and modifications may be made therein which are within the full intended scope of this invention as hereinafter claimed.

## Claims

1. A solid material comprising:
CBN grains; and
a phase comprising W₂Co₂₁B₆.

2. The material as recited in claim 1 further comprising a second phase selected from the group of consisting of CBN, TiCₓN_{y} where y=1-x and 0≤x≤1, WC, CoWB, and Al containing phases.

3. The material as recited in claim 2 further comprising one or more of a plurality of further phases selected from the group consisting of CBN, TiCₓN_{y} where y=1-x and 0≤x≤1, WC, CoWB, and Al containing phases, wherein each phase is different from the other phases.

4. A cutting tool comprising a substrate and a working material as recited in any of claims 1 to 3 over the substrate.

5. A method of making a CBN material comprising:
mixing TiCₓN_{y}, where y=1-x and 0≤x≤1, with Al to form a first mixture;
heating the first mixture at a sufficient vacuum for reacting only some of the Al in the mixture forming a binder material;
crushing the binder material;
mixing at least a portion of the crushed binder material with CBN grains forming second mixture; and
sintering the second mixture forming said CBN material.

6. The method as recited in claim 5 wherein heating comprises heating at a temperature in the range of about 900° C to about 1300° C.

7. The method as recited in claim 6 wherein heating comprises heating at said temperature in the range of about 1200° C to about 1300° C for about 90 minutes.

8. The method as recited in any of claims 5 to 7 wherein heating comprises heating the first mixture in a vacuum in the range of about 10⁻⁵ torr to about 10⁻⁶ torr.

9. The method as recited in any of claims 5 to 8 wherein crushing comprises crushing the binder material to a granular form having a grain size not greater than about 4 µm.

10. The method as recited in any of claims 5 to 9 wherein the CBN grains make up 65-98 volume percent of the second mixture.

11. The method as recited in any of claims 5 to 10 wherein sintering comprises sintering the second mixture along with a substrate forming the material bonded to the substrate.

12. The method as recited in any of claims 5 to 11 wherein crushed CBN grains have an average size, and wherein crushing comprises crushing the binder material to a granular form having an average grain size not greater than twice the CBN average grain size.

13. The method as recited in any of claims 5 to 12 wherein heating the first mixture at a sufficient vacuum comprises heating the first mixture at a temperature of at least about 900ºC and a vacuum below about 10⁻⁴ torr forming the binder material.

14. A method of making a CBN material comprising:
mixing TiCₓN_{y}, where y=1-x and 0≤x≤1, with Al to form a first mixture;
heating the first mixture at a temperature of at least about 900ºC and a vacuum below about 10⁻⁴ torr forming a binder material;
crushing the binder material;
mixing at least a portion of the crushed binder material with CBN grains forming a second mixture; and
sintering the second mixture forming said CBN material.
